# FASCICULE DE BREVET EUROPEEN

(11) **EP 1 144 064 B1**
(45) Date de publication et mention de la délivrance du brevet: **19.03.2003**
(21) Numéro de dépôt: 99961169.2
(22) Date de dépôt: 24.12.1999
(51) Int. Cl.: B01D 1/22, C02F 1/04, F28D 7/10

(54) **ECHANGEUR DE CHALEUR, NOTAMMENT POUR LE PRECHAUFFAGE DE LISIER**
WÄRMETAUSCHER, INSBESONDERE ZUM VORHEIZEN VON GÜLLE
HEAT EXCHANGER, IN PARTICULAR FOR PREHEATING LIQUID MANURE

(30) Priorité: 14.01.1999 FR 9900655
(43) Date de publication de la demande: 17.10.2001
(73) Titulaire: Sirven, 29260 Lesneven (FR)
(72) Inventeur: BOURDEL, Jacques, F-38410 Saint-Martin-d'Uriage (FR)
(74) Mandataire: Branger, Jean-Yves
(86) Numéro de dépôt international: FR9903284
(87) Numéro de publication internationale: WO00041793

(56) Documents cités:
- WO-A-93/16005
- CH-A- 282 725
- DE-C- 3 615 873
- US-A- 922 898
- US-A- 1 634 714
- US-A- 3 625 273
- US-A- 4 087 276
- US-A- 5 256 707

## Description

La présente invention concerne un échangeur de chaleur, et plus particulièrement un échangeur de chaleur qui est destiné à réchauffer une matière froide, fluide et mousseuse, qui contient des particules solides et des gaz, à partir d'un liquide chaud.

L'invention a été conçue dans le cadre d'une application particulière, à savoir le traitement de déjections animales, et plus précisément de lisier d'origine porcine, dans une installation de déshydratation du lisier.

Une installation de ce type est décrite par exemple dans la demande de brevet internationale WO-93/16005, au nom de la demanderesse, à laquelle on pourra se référer au besoin.

Dans l'installation qui fait l'objet de cette demande de brevet, la matière à traiter est étendue en continu sous la forme d'une couche mince sur la face supérieure d'une paroi d'échange thermique qui est chauffée à une température suffisante pour réaliser l'évaporation rapide des constituants volatils, et en particulier de l'eau, qui sont contenus dans la matière ; les résidus solides et secs sont retirés au fur et à mesure qu'ils se forment sur cette face, par raclage ; la paroi d'échange thermique est chauffée au moyen de la vapeur résultant de l'évaporation, cette vapeur étant comprimée mécaniquement, puis mise en contact avec la face inférieure de la paroi, de telle manière qu'elle s'y condense, le distillat étant ensuite évacué.

Ce procédé d'extraction est particulièrement économique, du fait que l'énergie libérée par la condensation est utilisée, de l'autre côté de la paroi d'échange thermique, pour l'évaporation.

Afin d'améliorer encore le rendement thermique du procédé, il est intéressant de préchauffer la matière à traiter, en l'occurrence le lisier, avant de l'amener à l'évaporateur, et ceci au moyen du distillat chaud qui provient de l'évaporateur.

C'est dans ce cadre qu'a été développée la présente invention, l'échangeur étant destiné à assurer le préchauffage du lisier destiné à être déshydraté par évaporation, le liquide chaud mis en oeuvre pour le préchauffage étant le distillat produit par le traitement de déshydratation.

La conception d'un tel échangeur s'est heurté à des difficultés techniques qui sont liées à la nature très particulière du lisier.

Le lisier, est en effet une matière fluide, semi-liquide, ayant la consistance d'une boue contenant des particules solides et des gaz, et extrêmement mousseuse. Il s'agit d'un milieu totalement hétérogène, contenant des matériaux lourds à sédimentation rapide, ainsi que des matériaux légers qui ont tendance à flotter ; cette matière est source d'un dégazage très important pendant le réchauffage, le volume de gaz produit - essentiellement du gaz carbonique (CO₂) - étant de deux à dix fois supérieur au volume du lisier ; il y a également formation abondante de mousse, et ceci dans un milieu très agressif.

Les essais qui ont été faits initialement à l'aide d'échangeurs de chaleur de type classique n'ont pas donné satisfaction, des dysfonctionnements, notamment dus au colmatage des conduits, étant observés très rapidement.

La présente invention vise à résoudre ces difficultés en proposant un échangeur de chaleur du type susmentionné qui soit adapté pour réchauffer une matière semi-liquide mousseuse, contenant des particules solides et du gaz, telle que le lisier notamment, cet échangeur de chaleur étant néanmoins d'une conception simple sur le plan technique, d'un prix de revient modéré, d'un entretien facile, et qui fonctionne dans des conditions convenables sur les plans de la fiabilité, du rendement et de l'efficacité.

Ces différents objectifs sont atteints, grâce au fait que l'échangeur de chaleur selon la présente invention comprend une série d'échangeurs élémentaires montés en série, constitués d'un tube horizontal à paroi thermiquement conductrice, dans lequel on fait circuler la matière, d'une extrémité à l'autre, et d'une enveloppe tubulaire concentrique, qui entoure ledit tube, dans lequel on fait circuler le liquide chaud d'une extrémité à l'autre, et en sens inverse de celui de ladite matière, et qu'à l'intérieur dudit tube est monté coaxialement un arbre rotatif portant une brosse hélicoïdale formant filet de vis d'Archimède, qui frotte contre la paroi interne du tube en assurant le transport de la matière dans celui-ci.

Par ailleurs, selon un certain nombre de caractéristiques additionnelles, non limitatives de l'invention :
- lesdits échangeurs élémentaires sont disposés sensiblement dans un même plan vertical, en position superposée, la circulation de la matière se faisant du haut vers le bas, c'est-à-dire de l'échangeur élémentaire supérieur à l'échangeur élémentaire inférieur de la série, tandis que la circulation du liquide chaud se fait en sens contraire, du bas vers le haut ;
- ledit tube présente, à son extrémité aval, une tubulure d'échappement des gaz ;
- ledit arbre rotatif est monté flottant à l'intérieur du tube, son centrage étant réalisé automatiquement dans celui-ci par suite de l'appui de la brosse hélicoïdale contre la paroi interne du tube ;
- l'arbre est entraîné en rotation par l'intermédiaire d'un organe de liaison qui lui confère une certaine liberté de débattement radial ;
- un joint hélicoïdal est interposé entre le tube et son enveloppe, de manière à canaliser et faire circuler le liquide chaud sous la forme d'une nappe hélicoïdale ;
- ledit joint est un tube en caoutchouc synthétique gonflable ;
- l'ensemble des brosses hélicoïdales ont des pas de vis du même sens, l'entraînement en rotation de deux arbres voisins se faisant en sens contraire ;
- chacun des arbres porte un pignon d'entraînement, l'ensemble des arbres étant entraîné par un moteur, par l'intermédiaire d'une chaîne en prise avec l'ensemble des pignons.

Dans une application possible de l'invention, cet échangeur est destiné à assurer le préchauffage d'un lisier destiné à être déshydraté par évaporation, le liquide chaud étant le distillat produit par le traitement de déshydratation.

D'autres caractéristiques et avantages de l'invention apparaîtront de la description et des dessins annexés, qui en représentent, à simple titre d'exemple non limitatif, un mode de réalisation préféré.

Sur ces dessins :
- la figure 1 est une vue générale schématique d'une installation de déshydratation de lisier, comprenant un échangeur conforme à l'invention ;
- la figure 2 est une vue schématique et partielle, coupée par un plan vertical, d'un échangeur conforme à l'invention ;
- la figure 3 est une vue schématique en perspective, avec arrachements, d'un échangeur élémentaire constitutif de cet échangeur ;
- la figure 4 est une vue de côté schématique de l'échangeur, cette vue étant destinée à illustrer le mode d'entraînement des brosses hélicoïdales constitutives de l'échangeur.

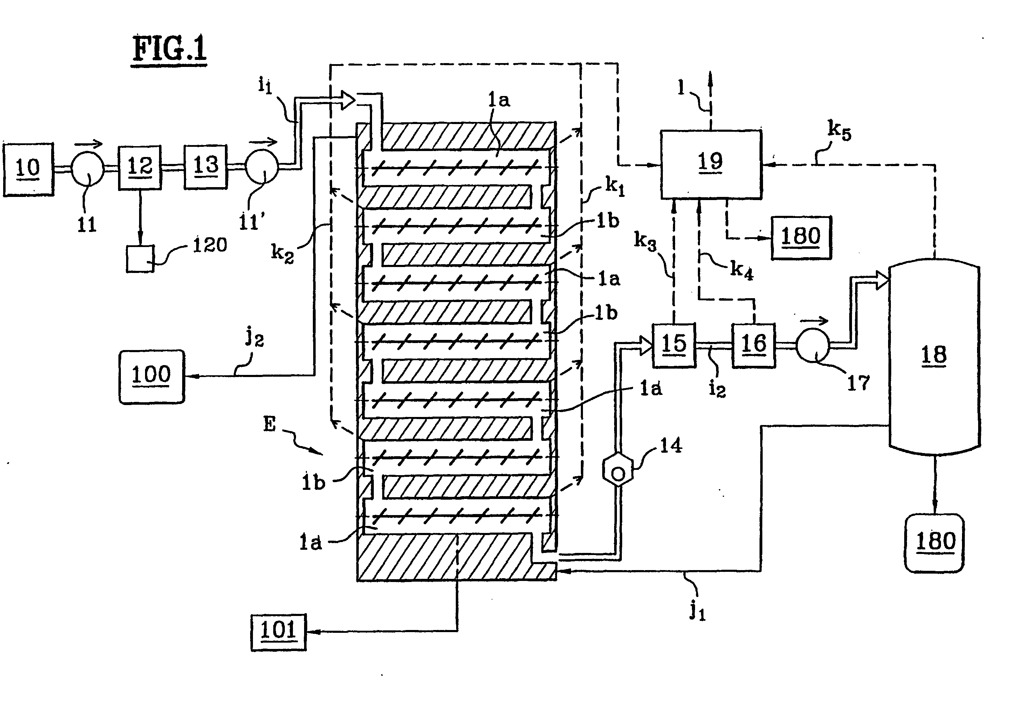

L'installation de déshydratation d'une matière aqueuse, telle que du lisier, illustrée sur la figure 1, comporte un échangeur de chaleur conforme à l'invention, qui est désigné par la référence E et schématiquement représenté avec des hachures.

Cet échangeur a pour fonction de réchauffer une matière fluide, en l'occurrence du lisier de porc, qui provient d'une cuve de stockage 10, par exemple située sur un lieu d'élevage des porcs.

Les conduits représentés en traits gras sur la figure, et désignés respectivement par les références **i**₁ et **i**₂, représentent respectivement les conduits d'amenée du lisier froid dans l'échangeur **E** et d'évacuation du lisier réchauffé de cet échangeur vers un appareil déshydrateur 18.

Les conduits d'amenée du distillat chaud du déshydrateur 18 à l'échangeur E et d'évacuation du distillat refroidi vers un lieu de stockage 100 sont représentés en traits maigres référencés respectivement **j**₁ et **j**₂.

Les différents conduits d'évacuation et de transfert des gaz vers un appareil épurateur 19 sont symbolisés par des traits interrompus κ (lignes pointillées).

Sur le conduit d'amenée du lisier i₁ on a désigné par les références 11 et 11' des pompes assurant le transfert du lisier dans le conduit, et par les références 12 et 13 des cuves broyeuse et mélangeuse respectivement.

Ces dispositifs ont pour fonction d'homogénéiser et de fluidifier le lisier tant que faire se peut, afin qu'il circule dans de bonnes conditions à l'intérieur de l'échangeur.

Au besoin des additifs appropriés peuvent être introduits dans les cuves 12 et 13 pour améliorer encore cette fluidification.

La cuve broyeuse 12 est avantageusement équipée d'une crépine dont le rôle est de retenir et de permettre l'évacuation de certains produits solides, notamment des poils, qui sont récupérés ensuite par un dispositif 120.

C'est donc un lisier relativement homogène qui est amené par le conduit i₁ dans l'échangeur **E**.

A titre indicatif, ce lisier se trouve à une température de l'ordre de 10°C.

Selon une caractéristique de l'invention, l'échangeur **E** est composé de plusieurs échangeurs élémentaires montés en série, et qui consistent en des conduits de transfert de lisier ; ces conduits 1 sont disposés horizontalement les uns au-dessus des autres, sensiblement dans un même plan vertical. L'échangeur **E** a donc l'allure générale d'une paroi verticale.

Le lisier froid est distribué dans l'échangeur élémentaire supérieur de l'ensemble ; il circule successivement dans les échangeurs sous-jacents, comme dans un serpentin, pour ressortir par l'échangeur élémentaire inférieur.

Le lisier circule donc en sens inverse dans deux échangeurs élémentaires voisins.

Sur la figure 1 on a désigné par **1a** les échangeurs élémentaires dans lesquels le lisier se déplace de la gauche vers la droite et par **1b** les échangeurs élémentaires dans lesquels le lisier se déplace de la droite vers la gauche.

Arrivé à l'extrémité aval d'un échangeur élémentaire 1, le lisier s'écoule par gravité dans l'extrémité amont de l'échangeur élémentaire suivant.

Comme on le verra plus précisément par la suite, au cours de son transfert dans l'échangeur **E**, ce lisier est réchauffé progressivement par le distillat résultant du traitement d'évaporation, lequel circule à contre-courant du lisier dans l'échangeur, de manière à lui transférer une partie de ses calories.

Le lisier réchauffé ressort par la base de l'échangeur et est acheminé vers le déshydrateur 18 par un conduit **i**₂ sur lequel on trouve successivement un dispositif de perte de charge 14, une cuve de dégazage 15, une cuve de démoussage 16 et une pompe de transfert 17.

La présence de la pompe 11' à l'entrée de l'échangeur **E**, et celle du dispositif de perte de charge 14 à la sortie de celui-ci, ont pour effet de monter le lisier en pression dans l'échangeur, et ainsi de réduire le volume des bulles et des mousses produites, en augmentant le coefficient d'échange thermique.

Le rôle des cuves 15 et 16 est de maintenir le lisier chaud agité pendant plusieurs heures afin de ralentir la production de mousse et d'extraire au maximum certains gaz présent dans le lisier, notamment le gaz d'ammoniaque ; des additifs appropriés peuvent avantageusement être introduits dans les cuves pour améliorer les traitements de démoussage et de dégazage.

Les gaz émanant des cuves 15 et 16 sont évacués par des conduits κ₃ et, respectivement κ₄ à un dispositif de traitement 19.

Le déshydrateur 18, qui est par exemple du même type que celui décrit dans le WO-93/16005 précité, assure le traitement du lisier chaud fourni par le conduit i₂, et produit une matière sèche pulvérulente, qui est récupérée en 180.

Ce dispositif produit également un distillat (liquide) chaud, dont la température est par exemple de l'ordre de 110° C, distillat qui est ramené par la conduite **j**₁ à l'échangeur **E**. Enfin, le déshydrateur 18 produit des gaz indésirables, qui sont évacués par la conduite κ₅ vers l'épurateur 19.

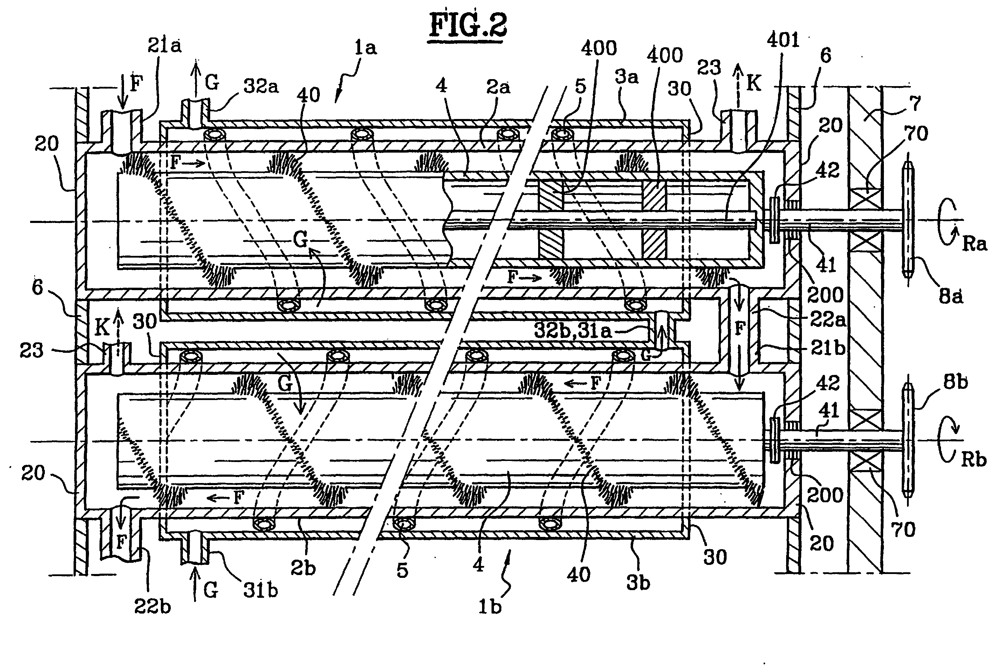

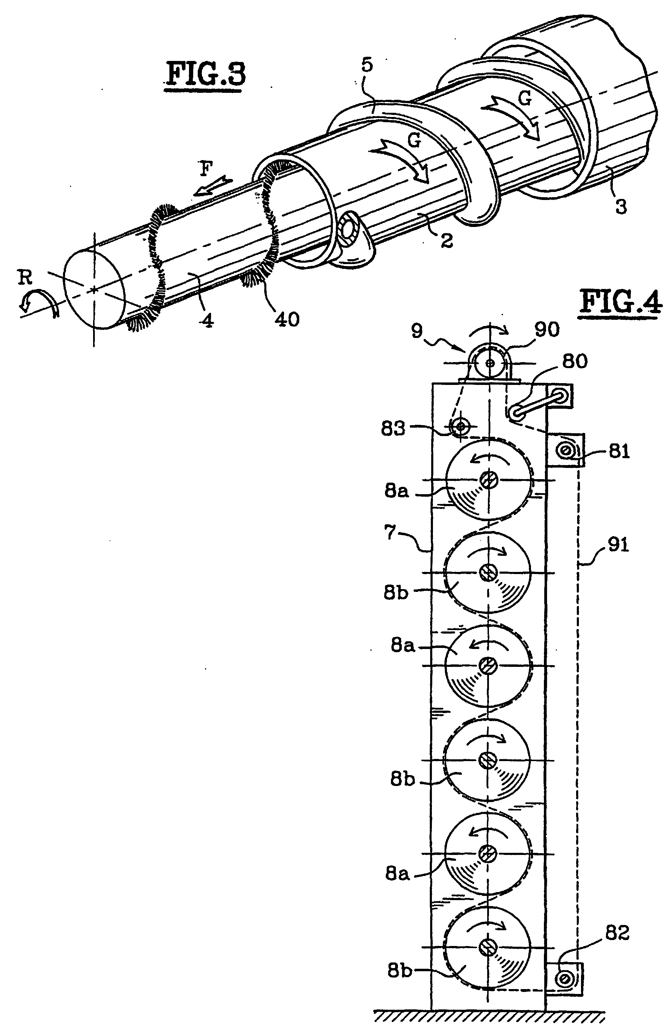

Comme déjà dit, le distillat chaud est introduit à la base de l'échangeur **E** ; comme cela sera expliqué ci-après, en référence notamment aux figures 2 et 3, le distillat circule à contre-courant du lisier dans l'échangeur ; il parcourt successivement la série d'échangeurs élémentaires **1a** et **1b** de bas en haut. Le distillat refroidi quitte l'échangeur par une conduite **j**₂ vers un réservoir de stockage 100.

On notera par ailleurs qu'a l'extrémité aval (si on considère le sens de déplacement du lisier) de chaque conduit élémentaire **1a**, **1b**, les gaz qui se sont formés dans cet échangeur élémentaire, à partir des bulles présentes dans le lisier, sont récupérés et évacués, via une conduite κ₁, respectivement κ₂, vers l'épurateur 19.

Après traitements de gaz et vapeurs indésirables, les gaz non polluants peuvent être évacués dans l'atmosphère par une conduite **1**.

En référence aux figures 2 à 4, nous allons maintenant décrire la structure et le fonctionnement de l'échangeur **E**.

Le nombre de conduits élémentaires qui constituent cet échangeur est par exemple de six. Seuls deux échangeurs élémentaires superposés ont été représentés sur la figure 2.

Chaque échangeur élémentaire 1 est essentiellement constitué d'un tube cylindrique 2 à l'intérieur duquel est monté un arbre rotatif 4 et à l'extérieur duquel est monté, concentriquement, une enveloppe tubulaire également cylindrique 3.

Chacun des tubes 2 comporte des cloisons d'extrémité 20 qui s'emboîtent dans des ouvertures correspondantes ménagées dans des plaques verticales 6.

Les tubes 2 sont fixés aux plaques 6 par des moyens appropriés non représentés, par exemple au moyen de vis ou par soudage.

Chaque tube 2 comporte, à l'une de ses extrémités - dite amont - une tubulure d'entrée 21 et à l'autre extrémité - dite aval - une tubulure de sortie 22.

Les tubulures d'entrée 21 sont tournées vers le haut, tandis que les tubulures de sortie 22 sont tournées vers le bas.

La tubulure de sortie d'un tube **2a** se raccorde à la tubulure d'entrée du tube suivant, sous-jacent, **2b**.

Les flèches **F** symbolisent la circulation du lisier à travers deux tubes successifs **2a, 2b** sur la figure 2.

Les enveloppes 3 qui entourent les tubes 2 sont parcourues par le distillat chaud, qui circule à contre-courant du lisier.

Ces enveloppes sont pourvues, à chacune de leurs deux extrémités, de tubulures d'entrée et de sortie du distillat, référencées respectivement 31 et 32. Selon une disposition inversée par rapport aux tubulures du tube 2, les tubulures d'entrée 31 sont dirigées vers le bas et les tubulures de sortie vers le haut, la tubulure de sortie **32b** d'une enveloppe **3b** se raccordant à la tubulure d'entrée **31a** de l'enveloppe suivante **3a**, disposée au-dessus d'elle.

L'entrée du lisier dans une enveloppe 3 se fait au niveau de l'extrémité aval du tube 2, et sa sortie au niveau de son extrémité amont.

Les tubes 2 sont réalisés dans un matériau thermiquement bon conducteur, de manière à permettre le bon transfert des calories du distillat circulant dans l'enveloppe 3 au lisier circulant dans le tube 2.

En pratique, on peut utiliser, comme matériau constitutif des tubes 2 et 3, de l'acier inoxydable qui, tout en transmettant convenablement la chaleur, résiste bien aux agressions chimiques du lisier, très agressif.

La circulation du distillat est symbolisée par les flèches **G** sur la figure 2.

L'arbre 4 consiste en un tube cylindrique, avantageusement en acier inoxydable, dont le diamètre est légèrement inférieur au diamètre intérieur du tube 2 à l'intérieur duquel il est logé.

Sur ce tube est enroulée en hélice une brosse 40 formée de brins - ou poils - en matériau synthétique souple et résistant à la corrosion du lisier ; il s'agit par exemple de fibres en polyamide, de diamètre de l'ordre de 0,4 mm disposés radialement, l'ensemble des fibres étant enroulé hélicoïdalement sur l'arbre tubulaire, au pas de 150 mm par exemple.

A titre indicatif le diamètre intérieur du tube 2 est de l'ordre de 200 mm, tandis que le diamètre extérieur de l'arbre tubulaire 4 est de l'ordre de 170 mm, de sorte que l'interstice radial occupé par la brosse hélicoïdale est de l'ordre de 15 mm.

Toujours à titre indicatif, le tube 2 a une longueur de 6 m par exemple.

Le sens d'enroulement de la brosse 40 sur son arbre est déterminé, bien entendu, en fonction de son sens de rotation, de telle manière qu'elle joue le rôle du filet d'une vis d'Archimède, apte à déplacer la matière de l'extrémité amont vers l'extrémité aval du tube 2 qui la contient.

Les pas de l'ensemble des brosses sont dans le même sens, deux arbres voisins **4a**, **4b** étant entraînés en rotation en sens contraires symbolisés par les flèches **Ra** et **Rb**, comme on le verra plus loin.

Entre le tube 2 et l'enveloppe tubulaire 3 qui l'entoure est interposé un joint gonflable 5, également enroulé en hélice.

Il s'agit par exemple d'un joint de section aplatie, en caoutchouc synthétique, du genre "EPDM", qui est enroulé initialement sous-vide autour du tube 2, son expansion se faisant automatiquement sous l'effet de la pression atmosphérique. Ce type de joint gonflable est bien connu.

Il se plaque ainsi intimement contre les parois externes et internes des tubes 2 et 3 respectivement.

Une fois en place, ce joint délimite un espace en forme de nappe annulaire, le long de laquelle peut se faire la circulation du distillat, à contresens de la progression du lisier dans le tube central 2.

Grâce à cette disposition, on obtient un très bon échange thermique entre le liquide caloporteur (le distillat) et la matière à réchauffer (le lisier).

Comme on le voit sur la partie supérieure droite de la figure 2, il est prévu à l'intérieur de chaque arbre tubulaire 4 un ensemble de disques 400. Ils sont emmanchés, par une ouverture centrale, sur une tige axiale 401. Ils servent de lest pour compenser la poussée d'Archimède générée par le lisier sur l'arbre 4. De plus, ils rigidifient la paroi tubulaire, afin de résister à la pression extérieure du lisier.

L'entraînement de chaque arbre rotatif 4 se fait par un pignon moteur 8 monté à l'extrémité d'un axe 41 qui prolonge l'arbre 4, à l'une de ses extrémités.

Tous les pignons d'entraînement **8a**, **8b** sont disposés du même côté de l'arbre 4 auquel ils sont affectés, ces pignons étant tous situés dans le même plan vertical.

Les axes 41 sont montés et guidés en rotation dans des paliers ou des roulements appropriés 70 montés dans un élément de bâti fixe 7.

Selon une caractéristique importante de l'invention chaque axe 41 comporte un organe de liaison 42, qui autorise un certain débattement radial de l'arbre 4 par rapport à son pignon d'entraînement 8.

Grâce à cette disposition, la brosse hélicoïdale 40 se centre automatiquement et librement à l'intérieur de son tube 2, ce qui assure une transmission régulière du mouvement et limite l'usure de la brosse.

Cette liaison 42, qui transmet le mouvement de rotation tout en donnant une certaine liberté de déplacement radial, est de type connu.

Elle comprend par exemple deux pièces complémentaires mâle/femelle présentant un contour anti-rotation - tel qu'une forme étoilée - et s'emboîtant avec un certain jeu.

Le passage de l'axe 41 dans la cloison d'extrémité correspondante 20 du tube 2 se fait à travers une bague d'étanchéité annulaire 200, apte à empêcher l'échappement du lisier à ce niveau.

Le dessin de la figure 4 montre de quelle manière l'ensemble des arbres portant les brosses hélicoïdales est entraîné en rotation à partir d'un moteur unique 9.

Il s'agit d'un moto-réducteur électrique, qui est monté en partie haute du bâti 7 de l'échangeur. II porte un pignon de sortie 90 sur lequel engrène une chaîne d'entraînement 91. Celle-ci passe successivement sur un pignon tendeur 80, sur des pignons de renvoi 81,82, sur la série de pignons d'entraînement 8, puis sur un dernier pignon de renvoi 83.

Comme le montre cette figure 4, la chaîne 91 passe sensiblement sur la moitié de chaque pignon 8 (c'est-à-dire sur un secteur angulaire de 180°), avec alternance d'un pignon à l'autre, de sorte que les pignons **8a** sont entraînés en sens inverse des pignons **8b**.

Les sens de rotation des pignons sont symbolisés par des flèches sur la figure 4.

Grâce à cette disposition, le refoulement du lisier se fait en sens contraire dans deux tubes adjacents **2a** et **2b**.

La figure 3 permet de visualiser la circulation **F** du lisier, axialement à l'intérieur du tube 2 sous l'effet de la rotation **R** de l'arbre 4 portant la brosse hélicoïdale 40 ; elle permet également de visualiser la circulation G du distillat à la périphérie du tube 2 et à l'intérieur de l'enveloppe 3 dans l'espace annulaire hélicoïdal délimité par le joint gonflable 5.

Avantageusement, ce joint 5 peut être enroulé dans des sens différents sur les deux catégories de tubes **2a**, **2b**, pour tenir compte du sens de circulation du lisier et améliorer l'échange thermique.

A l'extrémité aval de chaque tube 2 est prévue une tubulure 23, dirigée vers le haut, qui permet l'évacuation des gaz qui se sont formés dans ce tube, comme symbolisé par les flèches **K**.

Cette évacuation se fait par les conduites κ₁ et κ₂ dont il a été fait état plus haut, en référence à la figure 1.

A titre indicatif, la vitesse de rotation des arbres 4 est de l'ordre de 40 tr/mn.

Les débits de lisier et de distillat à travers l'échangeur sont respectivement de l'ordre de 1 000 et de 900 litres/heure.

Au moyen d'un distillat dont la température à l'entrée de l'échangeur est de 110° C, il est possible d'élever la température du lisier de 10° C à 100° C environ ; le distillat quittant l'échangeur s'est refroidi à une température de l'ordre de 20° C environ.

La brosse tournante permet de faire avancer les sédiments et les bulles dans le même sens et à la même vitesse que le lisier lui-même ; arrivés à l'extrémité aval de chaque tube, les sédiments tombent par gravité dans le tube inférieur tandis que les bulles, qui se sont vaporisées, sont évacuées.

Bien que cet échangeur ait été conçu dans une application particulière, à savoir le traitement du lisier, il va de soi qu'il peut lui trouver diverses autres applications, dès lors qu'il s'agit de réchauffer une matière fluide et mousseuse contenant des sédiments et des bulles, matière qui serait difficile, voire impossible, de traiter dans des échangeurs traditionnels.

## Revendications

1. Echangeur de chaleur destiné à réchauffer une matière froide, fluide et mousseuse, contenant des particules solides et des gaz, telle que du lisier, à partir d'un liquide chaud, **caractérisé par le fait qu'**il comprend une série d'échangeurs élémentaires (1) montés en série, constitués d'un tube horizontal (2) à paroi thermiquement conductrice, dans lequel on fait circuler la matière, d'une extrémité à l'autre, et d'une enveloppe tubulaire (3) concentrique, qui entoure ledit tube (2), dans laquelle on fait circuler le liquide chaud d'une extrémité à l'autre, et en sens inverse de celui de ladite matière, et qu'à l'intérieur dudit tube (2) est monté coaxialement un arbre rotatif (4) portant une brosse hélicoïdale (40) formant filet de vis d'Archimède, qui frotte contre la paroi interne du tube (2) en assurant le transport de la matière dans celui-ci.

2. Echangeur de chaleur selon la revendication 1, **caractérisé par le fait que** lesdits échangeurs élémentaires (1) sont disposés sensiblement dans un même plan vertical, en position superposée, la circulation de la matière se faisant du haut vers le bas, c'est-à-dire de l'échangeur élémentaire supérieur à l'échangeur élémentaire inférieur de la série, tandis que la circulation du liquide chaud se fait en sens contraire, du bas vers le haut.

3. Echangeur de chaleur selon l'une des revendications 1 ou 2, **caractérisé par le fait que** ledit tube (2) présente, à son extrémité aval, une tubulure d'échappement des gaz (23).

4. Echangeur de chaleur selon l'une des revendications 1 à 3, **caractérisé par le fait que** ledit arbre rotatif (4) est monté flottant à l'intérieur du tube (2), son centrage étant réalisé automatiquement dans celui-ci par suite de l'appui de la brosse hélicoïdale (40) contre la paroi interne du tube (2).

5. Echangeur de chaleur selon la revendication 4, **caractérisé par le fait que** l'arbre (4) est entraîné en rotation par l'intermédiaire d'un organe de liaison (42) qui lui confère une certaine liberté de débattement radial.

6. Echangeur de chaleur selon l'une des revendications 1 à 5, **caractérisé par le fait qu'**un joint hélicoïdal (5) est interposé entre le tube (2) et son enveloppe (3), de manière à canaliser et faire circuler le liquide chaud sous la forme d'une nappe hélicoïdale.

7. Echangeur de chaleur selon la revendication 6, **caractérisé par le fait que** ledit joint est un tube en caoutchouc synthétique gonflable.

8. Echangeur de chaleur selon l'une des revendications 1 à 7, **caractérisé par le fait que** l'ensemble des brosses hélicoïdales (40) ont des pas de vis du même sens, l'entraînement en rotation de deux arbres voisins (4) se faisant en sens contraire.

9. Echangeur de chaleur selon l'une des revendications 1 à 8, **caractérisé par le fait que** chacun des arbres (2) porte un pignon d'entraînement (8), l'ensemble des arbres étant entraîné par un moteur (9) par l'intermédiaire d'une chaîne (91) en prise avec l'ensemble des pignons (8).

10. Echangeur de chaleur selon l'une des revendications 1 à 9, **caractérisé par le fait qu'**il assure le préchauffage d'un lisier destiné à être déshydraté par évaporation, le liquide chaud étant le distillat produit par le traitement de déshydratation.

## Claims

1. A heat exchanger for using a hot liquid to warm a cold substance that is fluid and foamy, containing solid particles and gas, such as liquid manure, the heat exchanger being **characterized by** the fact that it comprises a plurality of unit heat exchangers (1) connected in series, each constituted by a horizontal tube (2) having a heat conducting wall, in which the substance is caused to circulate from one end to the other, and a concentric tubular case (3) surrounding said tube (2) in which the hot liquid is caused to circulate from one end to the other in the opposite direction to the circulation of said substance, and that inside said tube (2) there is coaxially mounted a rotary shaft (4) carrying a helical brush (40) forming an Archimedes' screw thread that rubs against the inside wall of the tube (2) to ensure that the substance is transported therealong.

2. A heat exchanger according to claim 1, **characterized by** the fact that said unit heat exchangers (1) are disposed substantially in a common vertical plane one above another, with the substance circulating downwards, i.e. from the top unit heat exchanger to the bottom unit heat exchanger of the series, while the hot liquid circulates in the opposite direction, i.e. upwards.

3. A heat exchanger according to claim 1 or claim 2, **characterized by** the fact that the downstream end of said tube (2) has a gas removal fitting (23).

4. A heat exchanger according to any one of claims 1 to 3, **characterized by** the fact that said rotary shaft (4) is mounted inside the tube (2) via a floating mount, the shaft being centered automatically within the tube by the helical brush (40) bearing against the inside wall of the tube (2).

5. A heat exchanger according to claim 4, **characterized by** the fact that the shaft (4) is rotated by means of a coupling member (42) which leaves the shaft with a certain amount of freedom to move radially.

6. A heat exchanger according to any one of claims 1 to 5, **characterized by** the fact that a helical gasket (5) is interposed between the tube (2) and its case (3) so as to channel the hot liquid and cause it to circulate in the form of a helical sheet.

7. A heat exchanger according to claim 6, **characterized by** the fact that said gasket is an inflatable tube of synthetic rubber.

8. A heat exchanger according to any one of claims 1 to 7, **characterized by** the fact that all of the helical brushes (40) have screw pitches with the same handedness, while pairs of adjacent shafts (4) are rotated in opposite directions.

9. A heat exchanger according to any one of claims 1 to 8, **characterized by** the fact that each of the shafts (2) carries a driving sprocket (8), with all of the shafts being driven by a motor (9) via a chain (91) engaging the set of sprockets (8).

10. A heat exchanger according to any one of claims 1 to 9, **characterized by** the fact that it serves to preheat liquid manure that is to be dehydrated by evaporation, the hot liquid being the distillate produced by the dehydration treatment.

## Patentansprüche

1. Wärmetauscher für die Erwärmung einer kalten flüssigen und schäumenden Substanz, die feste Partikel und Gase enthält, wie zum Beispiel eine Gülle, aus einer heißen Flüssigkeit,
**dadurch gekennzeichnet, dass**
er eine Reihe von in Serie angeordneten elementaren Wärmetauschern (1) enthält, die aus einem horizontalen Rohr (2) mit wärmeleitenden Wänden, in denen die Substanz zwischen beiden Enden zirkuliert wird, und einer konzentrischen rohrförmigen Ummantelung (3) bestehen, welche das Rohr (2) umgibt, in dem die warme Flüssigkeit zwischen beiden Enden des Rohres und entgegengesetzt zu der Substanz zirkuliert wird, und dadurch, dass im Inneren des Rohres (2) eine drehende Welle (4) koaxial montiert ist, die eine spiralförmige Bürste (40) trägt, welche eine archimedische Schraube bildet, die an der Innenwand des Rohres (2) reibend anliegt, um dadurch die Substanz in diesem Rohr zu transportieren.

2. Wärmetauscher nach Anspruch 1,
**dadurch gekennzeichnet, dass**
die elementaren Wärmetauscher (1) weitgehend in der gleichen vertikalen Ebene übereinander liegend angeordnet sind, wobei die Zirkulierung der Substanz von oben nach unten erfolgt, das heißt, von dem oberen elementaren Wärmetauscher zu dem unteren elementaren Wärmetauscher in der Serie, während die Zirkulierung der heißen Flüssigkeit in der entgegengesetzten Richtung erfolgt, das heißt, von unten nach oben.

3. Wärmetauscher nach einem der Ansprüche 1 oder 2,
**dadurch gekennzeichnet, dass**
dieses Rohr (2) an seinem unteren Ende ein Auspuffrohr (23) für Gase enthält.

4. Wärmetauscher nach einem der Ansprüche 1 bis 3,
**dadurch gekennzeichnet, dass**
die drehende Welle (4) schwimmend im Inneren des Rohres (2) montiert ist, in dem sie auf Grund der Anlage der spiralförmigen Bürste (40) an der Innenwand des Rohres (2) automatisch zentriert wird.

5. Wärmetauscher nach Anspruch 4,
**dadurch gekennzeichnet, dass**
die drehende Welle (4) über ein Verbindungselement (42) gedreht wird, das ihr einen gewissen radialen Ausschlag verleiht.

6. Wärmetauscher nach einem der Ansprüche 1 bis 5,
**dadurch gekennzeichnet, dass**
eine spiralförmige Dichtung (5) zwischen dem Rohr (2) und seiner Ummantelung angeordnet ist, um die heiße Flüssigkeit in Form einer spiralförmigen Bahn zu kanalisieren und zu zirkulieren.

7. Wärmetauscher nach Anspruch 6,
**dadurch gekennzeichnet, dass**
diese Dichtung aus einem Rohr aus einem aufblasbaren synthetischen Gummi besteht.

8. Wärmetauscher nach einem der Ansprüche 1 bis 7,
**dadurch gekennzeichnet, dass**
die spiralförmigen Bürsten (40) in der gleichen Richtung verlaufende Gewindegänge haben, wobei die Drehung von zwei benachbarten Wellen (4) in der entgegengesetzten Richtung erfolgt.

9. Wärmetauscher nach einem der Ansprüche 1 bis 8,
**dadurch gekennzeichnet, dass**
jede der Wellen (4) ein Antriebsritzel (8) trägt, und die Wellen mit Hilfe eines Motors (9) über eine Kette (91) angetrieben werden, die mit den Ritzeln (8) im Eingriff steht.

10. Wärmetauscher nach einem der Ansprüche 1 bis 9,
**dadurch gekennzeichnet, dass**
er für die Vorheizung einer Gülle sorgt, die durch Verdampfung dehydriert werden soll, und die heiße Flüssigkeit das Destillat ist, welches durch die Dehydrierung produziert worden ist.
